# EUROPEAN PATENT SPECIFICATION

(11) **EP 3 375 734 B1**
(45) Date of publication and mention of the grant of the patent: **23.02.2022**
(21) Application number: 18161967.7
(22) Date of filing: 15.03.2018
(51) Int. Cl.: B65G 1/04, B65G 1/137

(54) **SYSTEM AND METHOD FOR THE ORDER-DEPENDENT COLLECTION OF CONTAINERS**
SYSTEM UND VERFAHREN ZUR REIHENFOLGEABHÄNGIGEN SAMMLUNG VON BEHÄLTERN
SYSTÈME ET PROCÉDÉ DE COLLECTE DE RÉCIPIENTS SELON L'ORDRE

(30) Priority: 15.03.2017 NL 2018520
(43) Date of publication of application: 19.09.2018
(73) Proprietor: Vanderlande Industries B.V., 5466 RB Veghel (NL)
(72) Inventor: DE NIJS, Thomas Jacobus, 5466 RB VEGHEL (NL); VAN WIJNGAARDEN, Bruno, 5466 RB VEGHEL (NL)
(74) Representative: Algemeen Octrooi- en Merkenbureau B.V.

(56) References cited:
- EP-A1- 2 673 217
- EP-A1- 2 923 971
- EP-B1- 2 673 217
- WO-A1-2016/139003

## Description

The present invention relates to a system for the order-dependent collection of containers at a collection location, comprising containers, a number of mutually parallel racks, each having, at a number of levels arranged above one another, juxtaposed storage positions for the containers, a guide system comprising horizontal longitudinal guides which extend in aisles between neighbouring racks at a number of levels parallel to the racks and horizontal transverse guides which extend transversely to the racks and adjoin the longitudinal guides, trolleys which can be displaced at different levels along the longitudinal guides and the transverse guides, each of which trolleys is provided with exchange means at least for transferring a container to a storage position and accepting a container from a storage position, a transport system for transporting containers from a trolley which is situated at an exchange location which forms part of the guide system to the collection location, in which the exchange location forms part of a row of exchange locations which are provided straight above one another at least over part of the levels, the transport system comprising a number of transfer members which are arranged straight above one another and are provided at the same levels as the exchange locations, as well as a lift for containers, in which each of the transfer members extends between an exchange location and the lift for transferring containers from an exchange location to the lift, the transport system further comprising a supply conveyor which extends between the lift and the collection location for further transporting a container from the lift to the collection location, in which the lift is provided with a carrying member which is configured to accept a container from a transfer member and to transfer the container to the supply conveyor.

Such a system is of the level-captive aisle roaming type and is described in International publication WO-A1-2016139003. In contrast to the aisle-captive systems, the trolleys can, at a certain level, displace the containers from each storage position at the respective level to the lift. In the known system, each of the transfer members is designed as a transport member which takes a single product container. With such a system, it is important that there is a continuous supply of product containers to the collection location in order to be able to operate the system efficiently. With level-captive aisle roaming systems, as the number of aisles increases, the risk increases that the containers are not supplied to a lift in a timely manner, because then the average distance which a trolley has to travel between a storage position and the exchange location, as well as the distribution of this distance increases. In this case, it is furthermore important that the supply of product containers takes place in the correct order. It is an object of the invention to provide a system which can be operated with increased efficiency, in particular in situations in which the orders are relatively small and for example comprise fewer than ten different products, as may typically be the case in e-commerce environments, in which the number of trolleys and/or the number of lifts may be kept small and without additional facilities being required to ensure the correct order and/or for temporary buffering between the lift and the collection location. To this end, a system according to claim 1 is provided, wherein each of the transfer members is configured for temporarily accommodating at least two successive containers and wherein each of the transfer members therefore has at least two accommodation positions for a container at at least two respective transfer positions of each transfer member and at least some of the exchange locations are of multiple design with a number of exchange positions, in which each exchange position extends next to a transfer position so as to be able to transfer a product container from a trolley at a transfer position to the transfer position situated next to the exchange position. In this way, it is on the one hand possible to ensure with an increased degree of certainty that a lift can continuously accept containers from a transfer member at a certain level. On the other hand, it is also possible to ensure with an increased degree of certainty that a trolley can transfer containers from an exchange location to a transfer member. In this way, both the lift and the trolleys can be used more efficiently. In this case, the lift may function as a sequencer as the lift can accept containers from transfer members at different levels in the desired order. As a result of the invention, it is also possible to influence the order in which containers are supplied to the lift when transferring containers from a trolley at an exchange location to a transfer member. More specifically, the order in which containers are supplied to a transfer member may differ from the order in which these containers are transferred by the transfer member to the lift, which offers greater freedom with regard to the first-mentioned order, thus allowing trolleys to be used more efficiently.

In order to increase the capacity of the system, all exchange locations may be of multiple design.

In order to increase the freedom of the order in which containers can be supplied to transfer members, the number of exchange positions of an exchange location may be equal to the number of transfer positions of the transfer member to which containers can be transferred from the respective exchange location.

For practical reasons, it may be preferable to design the exchange locations which are of multiple design and/or the transfer members as conveyors. Such conveyors may be, for example, roller conveyors, belt conveyors or combinations thereof.

It has been found that the efficiency of the system can already be increased significantly if each of the transfer members is configured for temporarily accommodating no more and no less than two successive containers.

The invention is particularly suitable, but not exclusively, to be used if the containers are product containers and a collection station is provided at the location of the collection location for collecting products in collection containers, also referred to as order containers, such as typically order boxes, from the product containers. Product containers are containers for accommodating one product or a number of identical products. Alternatively, product containers may also be provided with compartments, with each of the compartments accommodating one product or a number of identical products. The products in different compartments may differ from one another. Due to the fact that the invention makes it possible to coordinate smoothly between supplying products in product containers in a desired order at the collection location and processing orders at the location of the collection station, the collection station may be made relatively simple and small, as only a limited number of collection containers has to be available at the location of the collection station at the same time in order to be filled with products from the product containers.

The number of available collection containers which are present at the collection station may even be reduced to one. In this context, a further possible embodiment of the system is characterized by the fact that the collection station is configured to accommodate only one collection container in which products from product containers supplied to the collection station can be placed.

As an alternative for a collection station, it is also possible for a consolidation station for collecting the containers on a carrier to be provided at the location of the collection location. The carriers may be designed, for example, as pallets, rolling containers or dollies. The containers which are collected on the carriers may be both product containers and collection containers. During consolidation, it may also be very important to collect containers on a carrier in a certain order, for example if unloading the carrier has to take place in a specific order or in order to place relatively heavy containers at the bottom of the carrier. Consolidation may be effected manually, in a mechanised way or in a fully automated fashion.

According to a possible embodiment, the transport system is also configured to transport containers back from the collection location to an exchange location, to which end the transport system may comprise a further lift as well as a discharge conveyor which extends between the collection location and the further lift, and a number of further transfer members which are arranged straight above one another and which each extend between the further lift and an exchange location, in which the further lift is provided with a further carrying member which is configured for accepting a container from the discharge conveyor and for transferring the container to a further transfer member. In this way, the transportation of the containers may be carried out in an efficient and effective way.

In order to increase the capacity, the system may be provided with a number of transport systems for transporting containers from trolleys at different exchange locations, which form part of different rows of exchange locations, to different collection locations.

Overcapacity of the system may be prevented by selecting the number of rows of exchange locations to be different from, for example smaller than, the number of aisles. In this case, it is also possible to adapt the capacity of the system by later increasing, or on the contrary decreasing, the number of rows of exchange locations.

The advantages of the invention are expressed in particular if the average number of trolleys per level is smaller than the number of aisles. In practice, the trolleys will then move from one aisle to another aisle at a certain level via a transverse guide.

In a possible embodiment, the transverse guides are at least provided on head ends of the longitudinal guides facing the collection location. Supply and removal of trolleys to and from the exchange location may take place in the direct vicinity of the exchange location via the transverse guides. In addition, there may also be transverse guides on the opposite head ends of the longitudinal guides.

Alternatively, it is also possible for the transverse guides to be at least provided between mutually opposite head ends of the longitudinal guides.

For maintenance or installation purposes, the system may be provided with a trolley lift for the trolleys. This trolley lift may, for example, also be used to satisfy a temporarily increased capacity need at a certain level of the racks by moving one or a number of trolleys from another level to the respective level by means of the further lift.

In order to increase the flexibility of the uses of the system, it is also possible that at least some of the exchange locations, preferably all exchange locations, are of multiple design in order to be able to transfer a container to the transfer member which is situated at the level of the respective multiple exchange location at at least two different accommodation positions. In this way, the order in which containers are transferred from the exchange location to a transfer member does not have to be identical to the order in which containers are transferred from the transfer member to the lift.

The invention furthermore provides a method for the order-dependent collection of products from product containers in collection containers at a collection location, in which a system according to the invention as explained above is used and a collection station is provided at the location of the collection location.

Furthermore, the invention provides a method for the order-dependent collection of containers on carriers at a collection location, characterized in that a system according to the invention as explained above is used and a consolidation station is provided at the location of the collection location.

More specifically, the above methods are methods in which a container is transferred from a trolley at an exchange position to a transfer position of a transfer member, which transfer position is situated between the carrying member of the lift and another transfer position of the transfer member, on which other transfer position a container is positioned. In this way, it is actually possible for the order in which containers are supplied to a transfer member to deviate from the order in which this transfer member transfers the respective containers to a lift, more specifically to the carrying member thereof.

The invention is explained in more detail by means of the description of a possible embodiment of the invention with reference to the following figures, in which:
Fig. 1 shows a perspective top view of (a part of) a collection system by means of which the invention will be explained;
Fig. 2 shows a part of Fig. 1 in more detail.

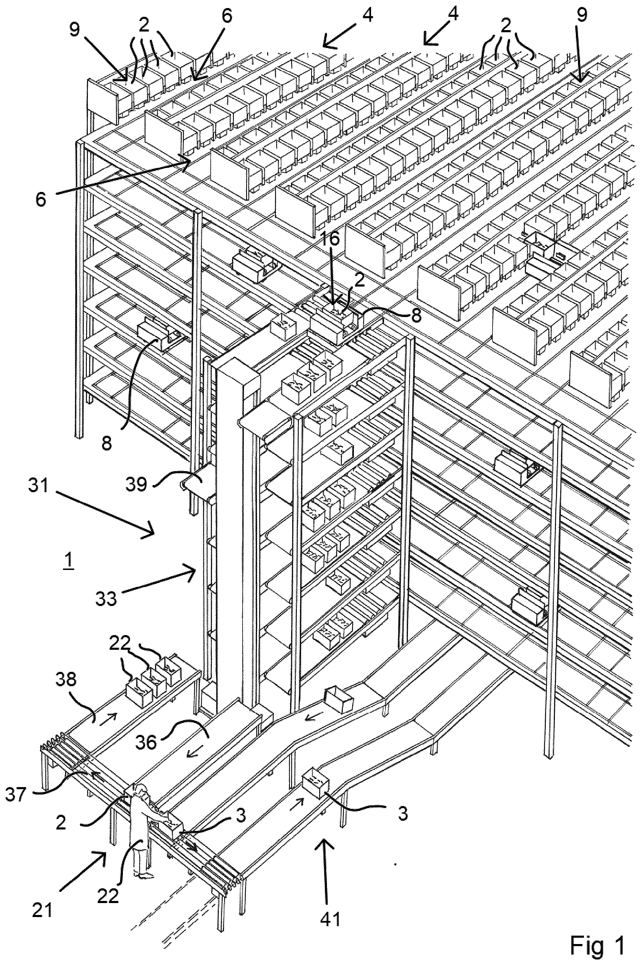

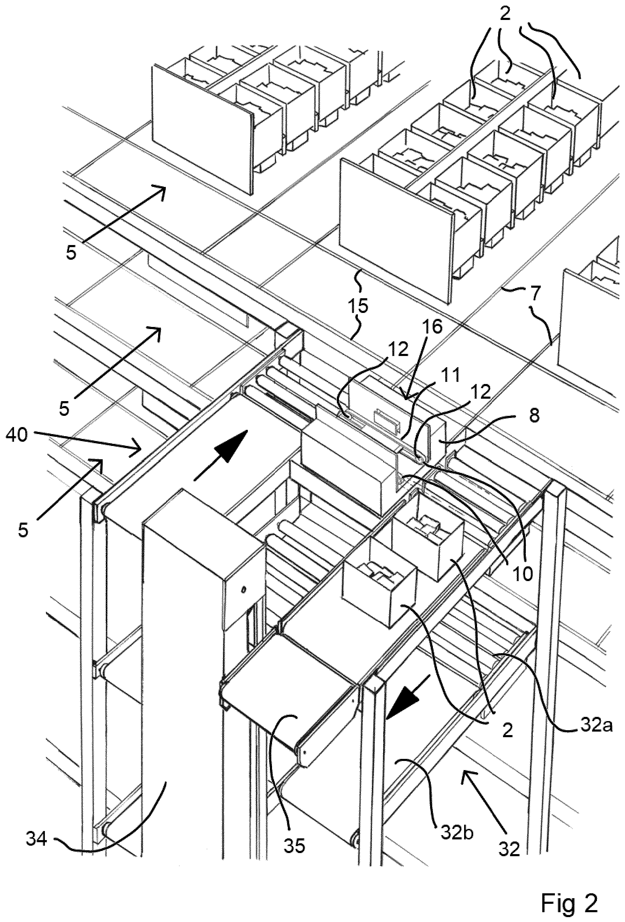

Figs. 1 and 2 relate to a collection system 1 according to the invention. The collection system 1 is configured for the order-dependent collection of products at the location of collection station 21, also referred to as order-picking station. At the location of collection station 21, products are taken out of product containers 2 by an operator 22 and placed in collection containers 3. The orders are entered into a control system which controls the collection system 1. The product containers 2 and the collection containers 3 are designed as boxes, but may also be designed differently. Thus, for example, the collection containers 3 may also be designed as trays or as a cardboard box. Each product container 2 contains one product or a number of identical products. It may also be the case that the product containers 2 have compartments, in which case each compartment may contain one product or a number of identical products, but with the different compartments containing different products.

The collection system 1 comprises a number of racks 4 for storing the product containers 2. The racks 4 extend parallel to each other and, on the mutually facing sides, comprise juxtaposed storage positions 9 for the product containers 2. In this exemplary embodiment, the storage positions 9 are provided on seven levels 5 arranged above one another. In effect, the storage positions 9 may be formed, for example, by bearing rims on which bottom edges of the box-shaped product containers 2 can rest.

Between neighbouring racks 4, aisles 6 are present. Within those aisles 6, longitudinal guides 7 are provided on each level 5 which extend parallel to the neighbouring racks 4. The longitudinal guides 7 extend along the entire length of the racks 4. The longitudinal guides 7 may, for example, be designed as rails. On the head ends of each rack 4 facing the collection station 21, transverse guides 15 are furthermore provided on each level 5. The transverse guides 15 adjoin the ends of the longitudinal guides 7 and extend at right angles thereto. Not on all, but on at least one level 5, for example on one of the five levels 5, it is possible to provide a floor at the location of the longitudinal guides 7 and the transverse guides 15, over which floor an operator can walk for the purpose of maintenance.

Collection system 1 further comprises a number of trolleys 8, also referred to as shuttles, which are displaceable along the storage positions of the two neighbouring racks 4 on the respective level 5 via the longitudinal guides 7 and the transverse guide 15. Such trolleys 8 are known per se, for example from International publication WO-A1-2016010429. At a certain level 5, the trolleys 8 can be displaced from one aisle 6 to another aisle 6 via the transverse guide 15.

The trolleys 8 each comprise running wheels, at least two of which may be driven by means of an electrical and wirelessly controlled drive system (not shown in any more detail) with which trolley 8 is provided. During the displacement, the running wheels, or at least some of them, run over a longitudinal guide 7 or over a transverse guide 15. Trolleys 8 may additionally be provided with guide wheels which are rotatable about vertical rotation axles which may cooperate in a guiding manner with the transverse guides 15 and the longitudinal guides 7 or with separate guides.

Each of the trolleys 8 furthermore comprises two arms 10 which are extendable in two opposite directions to a storage position 9. Arms 10 are each provided with an endless support belt 11 which is wound around two deflector rollers 12, at least one of which can be rotationally driven by the electrical drive system of trolley 8. By moving to a storage position 9, trolley 8, by means of arms 10, can either transfer a product container 2 resting on the top revolution of belts 11 to a storage position 9, or accept a product container 2 from a storage position 9. In an alternative embodiment, it is also possible to use, instead of arms 10 with support belts 11 which support the product containers 2, telescopic arms which can reach along the product containers 2 and can push the product containers 2 in a storage position 9 or pull them from a storage position 9 by means of foldable fingers. It is also possible to use, instead of arms 10 with support belts 11, one or a number of lifting spoons which can be extended underneath a product container 2.

In line with a longitudinal guide 7, an exchange location 16 is provided on each level 5 which adjoins the transverse guide 15 on the respective level 15. The exchange locations 16 at the different levels 5 form a vertical row of exchange locations. A trolley 8 can reach the exchange location 16 via the transverse guide in order to temporarily remain there without being in the way of other trolleys 8 which move over the transverse guide 15.

In order to transport product containers 2 from a trolley at an exchange location 16 to the collection station 21, the collection system 1 comprises a transport system 31. The transport system 31 comprises a row of transfer members which are designed as conveyors 32. A conveyor 32 is provided for each level 5. The transport system 31 furthermore comprises a lift 33 with a mast 34 along which a carrying member 35 can move. The conveyors 32 extend between an exchange location 16 and the lift 33, more specifically between an exchange location 16 and a position where the carrying member 35 of lift 33 can be positioned.

The length direction of the conveyors 32 extends parallel to the longitudinal guides 7 and in the present illustrative embodiment the former are designed as a driven roller conveyor 32a on the side of the exchange location 16 and as a driven belt conveyor 32b on the side of the lift. Conveyors 32 could, for example, also be designed as roller conveyors along their entire length. The carrying member 35 of lift 33 is likewise designed as a belt conveyor and is situated in line with belt conveyor 32b. In this way, the conveyors 32 are suitable to accept product containers 2 from a trolley 8 at an exchange location 16 by driving support belts 11 in order then to transport the product containers 2 to a carrying member 35 and to transfer product containers 2 to a carrying member 35. The length of the conveyors 32 is such that five product containers 2 can simultaneously be present at five transfer positions of a conveyor 32. In many situations, a significant advantage may already be achieved if the length of the conveyors 32 is such that two product containers 2 can simultaneously be present on the conveyors 32. Thus, such a conveyor 32 would then have two transfer positions.

At the bottom level 5, the transport system 31 comprises a supply conveyor 36 which extends in line with the conveyor 32 at the bottom level 5 and adjoins the carrying member 35 if the latter is situated at the bottom level 5. Each of the transverse guides 15 is thus situated between the exchange location 16 at the respective level 5 and the longitudinal guides 7 at the respective level. Supply conveyor 36 is designed as a belt conveyor and, in the selected illustrative embodiment, provides room for seven product containers 2 which the supply conveyor, in use, accepts from the carrying member 35. The length of the supply conveyor may also be greater, for example sufficiently large to provide room for ten product containers. Supply conveyor 36 terminates at the collection station 21.

The collection system 1 also comprises a transport system 41 provided for collection containers 3. By means of this transport system 41, empty or partially filled collection containers 3 are transported to the collection station 21. Depending on the orders received, the operator 22 there fills a collection container 3 with products which the operator takes from a product container 2 which is situated at the collection station 21.

Transport system 31 is further configured to transport product containers 2 from the collection station 21 back to an exchange location 16 again. More specifically, the transport system 31 to this end comprises conveyors 37 and 38 which perpendicularly adjoin each other at the bottom level 5, a carrying member 39 which can be displaced upwards and downwards along mast 34, in a similar fashion to carrying member 35, and a vertical row of further transfer members 40 which are of a design which is similar to that of transfer members 32 and are able to transfer product containers 2 to a trolley at an exchange location 16.

As a departure from what Figs. 1 and 2 show, the exchange locations 11 of the system according to the invention are of multiple design, which is to say having at least two exchange positions, so that each exchange location extends along at least two of the transfer positions, preferably all transfer positions, on the respective conveyors 32 on which product containers 2 may be positioned. A trolley 8 may transfer product containers 2 to different transfer positions of the conveyor 32 from the respective exchange positions of an exchange location 11. In this way, it is possible to influence the order in which product containers 2 are supplied to carrying member 35 and thus to collection station 21 on conveyors 32. Preferably, the longitudinal guides associated with the exchange locations 11 to this end extend up to mast 34. Contrary to what is shown in Figs. 1 and 2, conveyor 32 may also be designed to have, instead of a belt conveyor 32b, a roller conveyor, such as roller conveyor 32a, for each transfer position on belt conveyor 32b. In this embodiment, the roller conveyors associated with a conveyor 32 may be designed to be drivable both individually and collectively.

The use of at least two transfer positions per transfer location has the advantage that less stringent requirements can be made on the order in which product containers 2 are successively supplied to the conveyors 32, as a result of which the trolleys 8, and thus the system 1 in its entirety, may be used more efficiently. After all, due to the use of exchange locations, each having at least two exchange positions, next to each of which exchange positions a transfer position is provided, it is possible for the order in which product containers are transferred from a trolley at an exchange location to a conveyor 32 to deviate from the order in which these product containers are transferred to a lift 33 by the conveyor 32. This effect is achieved if, during use of the system 1, a product container 2 is transferred from a trolley 8 at an exchange position to a transfer position of conveyor 32, which transfer position is situated between the carrying member 35 of the lift 33 and another transfer position of the transfer member, at which other transfer position another product container 2 was positioned earlier.

The configuration of the collection system 1 as described above makes it possible to ensure with a high degree of certainty that the product containers 2 desired in the light of received orders arrive at the collection station 21 in a desired order and at a desired time. Due to the use of transfer members 32 which are each able to accommodate more than one, in this example five, product containers 2 at five transfer positions of the respective transfer member 32, the speed at which trolleys 8 can collect product containers 2 from a storage position 9 will not be a bottleneck in practice, or at least will not have to be one, and the number of trolleys 8 which forms part of the collection system 1 can be relatively small.

Although the invention has been explained above with reference to a single combination of a vertical row of exchange locations 16 with an associated transport system 31, it is also perfectly possible to increase the number of combinations of a row of exchange locations 16 with an associated transport system 31, including an associated collection station 22, if an increased capacity is desired. It is also possible to allow at least some of the exchange locations 16 between the longitudinal guides 7 of two neighbouring aisles 6 to adjoin transverse guide 15.

Furthermore, it is also possible, within the framework of the invention, to provide transverse guides at the ends of the longitudinal guides 7 situated opposite the collection station 21 and/or to provide transverse guides between the ends of the longitudinal guides 7 instead of transverse guides 15 or in combination with transverse guides 15, in which case the transverse guides would intersect the longitudinal guides 7.

In the above-described illustrative embodiment, the invention has been explained by means of the description of a collection system 1 which uses a collection station 21. The invention may also be used advantageously if a consolidation station is used instead of a collection station where products from product containers are collected in collection containers. At the location of the consolidation station, the containers, which are supplied by a transport system 31, are collected on a carrier. Thus, the consolidation station may, for example, be designed as a palletising station where product containers and/or collection containers originating from a storage position 9 are stacked on a pallet.

## Claims

1. System (1) for the order-dependent collection of containers (2) at a collection location, comprising containers (2) for products, a number of mutually parallel racks (4), each having, at a number of levels (5) arranged above one another, juxtaposed storage positions (9) for the containers, a guide system comprising horizontal longitudinal guides (7) which extend in aisles (6) between neighbouring racks at a number of levels (5) parallel to the racks (4) and horizontal transverse guides (15) which extend transversely to the racks (4) and adjoin the longitudinal guides (7), trolleys (8) which can be displaced at different levels (5) along the longitudinal guides (7) and the transverse guides (15), each of which trolleys (8) is provided with exchange means at least for transferring a container (2) to a storage position (9) and accepting a container (2) from a storage position (9), a transport system (31) for transporting containers (2) from a trolley (8) which is situated at an exchange location (16) which forms part of the guide system to the collection location, in which the exchange location (16) forms part of a row of exchange locations (16) which are provided straight above one another at least over part of the levels (5), the transport system comprising a number of transfer members (32) which are arranged straight above one another and are provided at the same levels (5) as the exchange locations (16), as well as a lift (33) for containers (2), in which each of the transfer members (32) extends between an exchange location (16) and the lift (33) for transferring containers (2) from an exchange location (16) to the lift (33), the transport system further comprising a supply conveyor (36) which extends between the lift (33) and the collection location (21) for further transporting a container (2) from the lift (33) to the collection location (21), in which the lift (33) is provided with a carrying member (35) which is configured to accept a container (2) from a transfer member (32) and to transfer the container (2) to the supply conveyor (36), **characterized in that** each of the transfer members (32) is configured for temporarily accommodating at least two successive containers (2) at at least two respective transfer positions of each transfer member (32), and **in that** at least some of the exchange locations (16) are of multiple design with a number of exchange positions, in which each exchange position extends next to a transfer position so as to be able to transfer a product container (2) from a trolley (8) at a transfer position to the transfer position situated next to the exchange position.

2. System (1) according to Claim 1, **characterized in that** all exchange locations (16) are of multiple design.

3. System (1) according to Claim 1 or 2, **characterized in that** the number of exchange positions of an exchange location (16) is equal to the number of transfer positions of the transfer member to which containers (2) can be transferred from the respective exchange location.

4. System (1) according to Claim 1, 2 or 3, **characterized in that** the exchange locations (16) which are of multiple design are designed as conveyors.

5. System according to Claim 1, 2, 3 or 4, **characterized in that** the transfer members (32) are designed as conveyors (32a, 32b).

6. System (1) according to one of the preceding claims, **characterized in that** each of the transfer members (32) is configured for temporarily accommodating no more and no less than two successive containers.

7. System (1) according to one of the preceding claims, **characterized in that** the containers (2) are product containers (2), and **in that** a collection station (21) is provided at the location of the collection location for collecting products in collection containers (3) from the product containers (2).

8. System (1) according to one of the preceding claims, **characterized in that** a consolidation station for collecting the containers (2) on a carrier is provided at the location of the collection location.

9. System (1) according to one of the preceding claims, **characterized in that** the number of rows of exchange locations (16) differs from the number of aisles (6).

10. System (1) according to one of the preceding claims, **characterized in that** the average number of trolleys (8) per level (5) is smaller than the number of aisles (6).

11. System (1) according to one of the preceding claims, **characterized in that** the transverse guides (15) are at least provided on the head ends of the longitudinal guides (7) facing the collection location.

12. System (1) according to one of the preceding claims, **characterized in that** the transverse guides (15) are at least provided between mutually opposite head ends of the longitudinal guides (7).

13. System (1) according to one of the preceding claims, **characterized in that** the system (1) is provided with a trolley lift for the trolleys (8).

14. System (1) according to one of the preceding claims, **characterized in that** at least some of the exchange locations (16), preferably all exchange locations (16), are of multiple design in order to be able to transfer a container (2) to the transfer member (32) which is situated at the level (5) of the respective multiple exchange location (16) at at least two different accommodation positions.

15. Method for the order-dependent collection of products at a collection location from containers (2) in collection containers (3) or the collection of containers (2) on carriers, **characterized in that** a system (1) according to one of the preceding claims is used, in which a container (2) is transferred from a trolley (8) at an exchange position to a transfer position of a transfer member (32), which transfer position is situated between the carrying member (35) of the lift (33) and another transfer position of the transfer member (32), on which other transfer position a container (2) is positioned.

## Patentansprüche

1. System (1) zur auftragabhängigen Sammlung von Behältern (2) an einem Sammelpunkt, umfassend Behälter (2) für Produkte, mehrere parallel zueinander verlaufende Regale (4), die jeweils auf mehreren übereinander angeordneten Ebenen (5) angrenzende Lagerpositionen (9) für die Behälter aufweisen, ein Führungssystem, das horizontale Längsführungen (7), die sich in Gängen (6) zwischen benachbarten Regalen auf mehreren Ebenen (5) parallel zu den Regalen (4) erstrecken, und horizontale Querführungen (15), die sich quer zu den Regalen (4) erstrecken und an die Längsführungen (7) angrenzen, umfasst, Wagen (8), die auf verschiedenen Ebenen (5) entlang der Längsführungen (7) und der Querführungen (15) verschoben werden können, wobei jeder der Wagen (8) mit einer Austauscheinrichtung zumindest zum Übergeben eines Behälters (2) an eine Lagerposition (9) und Aufnehmen eines Behälters (2) aus einer Lagerposition (9) versehen ist, ein Transportsystem (31) zum Transportieren von Behältern (2) von einem Wagen (8), der sich an einem Austauschpunkt (16) befindet, der Teil des Führungssystems zum Sammelpunkt ist, wobei der Austauschpunkt (16) Teil einer Reihe von Austauschpunkten (16) ist, die zumindest über einen Teil der Ebenen (5) gerade übereinander vorgesehen sind, wobei das Transportsystem mehrere Übergabeelemente (32), die gerade übereinander angeordnet und auf denselben Ebenen (5) wie die Austauschpunkte (16) vorgesehen sind, sowie einen Lift (33) für die Behälter (2) umfasst, wobei sich jedes der Übergabeelemente (32) zum Übergeben von Behältern (2) von einem Austauschpunkt (16) zum Lift (33) zwischen einem Austauschpunkt (16) und dem Lift (33) erstreckt, wobei das Transportsystem ferner einen Zuführförderer (36) umfasst, der sich zwischen dem Lift (33) und dem Sammelpunkt (21) erstreckt, um einen Behälter (2) vom Lift (33) weiter zum Sammelpunkt (21) zu transportieren, wobei der Lift (33) mit einem Trägerelement (35) versehen ist, das dazu ausgelegt ist, einen Behälter (2) von einem Übergabeelement (32) aufzunehmen und den Behälter (2) an den Zuführförderer (36) zu übergeben, **dadurch gekennzeichnet, dass** jedes der Übergabeelemente (32) dazu ausgelegt ist, vorübergehend mindestens zwei aufeinanderfolgende Behälter (2) an zumindest zwei jeweiligen Übergabepositionen jedes Übergabeelements (32) aufzunehmen, und dadurch, dass zumindest einige der Austauschpunkte (16) mehrfach ausgestaltet sind mit mehreren Austauschpositionen, wobei sich jede Austauschposition neben einer Übergabeposition erstreckt, um einen Produktbehälter (2) von einem Wagen (8) an einer Übergabeposition an die Übergabeposition neben der Austauschposition übergeben zu können.

2. System (1) nach Anspruch 1, **dadurch gekennzeichnet, dass** alle Austauschpunkte (16) mehrfach ausgestaltet sind.

3. System (1) nach Anspruch 1 oder 2, **dadurch gekennzeichnet, dass** die Anzahl der Austauschpositionen eines Austauschpunkts (16) der Anzahl der Übergabepositionen des Übergabeelements entspricht, an das Behälter (2) vom jeweiligen Austauschpunkt übergeben werden können.

4. System (1) nach Anspruch 1, 2 oder 3, **dadurch gekennzeichnet, dass** die Austauschpunkte (16), die mehrfach ausgestaltet sind, als Förderer ausgestaltet sind.

5. System nach Anspruch 1, 2, 3 oder 4, **dadurch gekennzeichnet, dass** die Übergabeelemente (32) als Förderer (32a, 32b) ausgestaltet sind.

6. System (1) nach einem der vorstehenden Ansprüche, **dadurch gekennzeichnet, dass** jedes der Übergabeelemente (32) dazu ausgelegt ist, vorübergehend nicht mehr und nicht weniger als zwei aufeinanderfolgende Behälter aufzunehmen.

7. System (1) nach einem der vorstehenden Ansprüche, **dadurch gekennzeichnet, dass** die Behälter (2) Produktbehälter (2) sind, und dadurch, dass eine Sammelstation (21) an dem Punkt des Sammelpunkts zum Sammeln von Produkten in Sammelbehältern (3) von den Produktbehältern (2) vorgesehen ist.

8. System (1) nach einem der vorstehenden Ansprüche, **dadurch gekennzeichnet, dass** eine Zusammenführungsstation zum Sammeln der Behälter (2) auf einem Träger an dem Punkt des Sammelpunkts vorgesehen ist.

9. System (1) nach einem der vorstehenden Ansprüche, **dadurch gekennzeichnet, dass** sich die Anzahl der Reihen von Austauschpunkten (16) von der Anzahl der Gänge (6) unterscheidet.

10. System (1) nach einem der vorstehenden Ansprüche, **dadurch gekennzeichnet, dass** die durchschnittliche Anzahl von Wagen (8) pro Ebene (5) kleiner ist als die Anzahl von Gängen (6).

11. System (1) nach einem der vorstehenden Ansprüche, **dadurch gekennzeichnet, dass** die Querführungen (15) zumindest an den Kopfenden der dem Sammelpunkt zugewandten Längsführungen (7) vorgesehen sind.

12. System (1) nach einem der vorstehenden Ansprüche, **dadurch gekennzeichnet, dass** die Querführungen (15) zumindest zwischen einander entgegengesetzten Kopfenden der Längsführungen (7) vorgesehen sind.

13. System (1) nach einem der vorstehenden Ansprüche, **dadurch gekennzeichnet, dass** das System (1) mit einem Wagenlift für die Wagen (8) versehen ist.

14. System (1) nach einem der vorstehenden Ansprüche, **dadurch gekennzeichnet, dass** zumindest einige der Austauschpunkte (16), vorzugsweise alle Austauschpunkte (16), mehrfach ausgestaltet sind, um einen Behälter (2) an das Übergabeelement (32) übergeben zu können, das sich auf der Ebene (5) des jeweiligen mehrfachen Austauschpunkts (16) an mindestens zwei unterschiedlichen Aufnahmepunkten befindet.

15. Verfahren zur auftragabhängigen Sammlung von Produkten an einem Sammelpunkt aus Behältern (2) in Sammelbehältern (3) oder zur Sammlung von Behältern (2) auf Trägern, **dadurch gekennzeichnet, dass** ein System (1) nach einem der vorstehenden Ansprüche verwendet wird, wobei ein Behälter (2) von einem Wagen (8) an einer Austauschposition an eine Übergabeposition eines Übergabeelements (32) übergeben wird, wobei sich die Übergabeposition zwischen dem Trägerelement (35) des Lifts (33) und einer anderen Übergabeposition des Übergabeelements (32) befindet, auf dessen anderer Übergabeposition ein Behälter (2) positioniert ist.

## Revendications

1. Système (1) pour la collecte selon des ordres de récipients (2) à un emplacement de collecte, comprenant des récipients (2) pour des produits, un certain nombre de casiers mutuellement parallèles (4), ayant chacun, à un certain nombre de niveaux (5) agencés les uns au-dessus des autres, des positions de stockage juxtaposées (9) pour les récipients, un système de guidage comprenant des guides longitudinaux horizontaux (7) qui s'étendent dans des allées (6) entre des casiers voisins à un certain nombre de niveaux (5) parallèles aux casiers (4) et des guides transversaux horizontaux (15) qui s'étendent transversalement aux casiers (4) et sont contigus aux guides longitudinaux (7), des chariots (8) qui peuvent être déplacés à différents niveaux (5) le long des guides longitudinaux (7) et des guides transversaux (15), dont chacun des chariots (8) est pourvu de moyens d'échange au moins pour transférer un récipient (2) vers une position de stockage (9) et accepter un récipient (2) à partir d'une position de stockage (9), un système de transport (31) pour transporter les récipients (2) à partir d'un chariot (8) qui est situé à un emplacement d'échange (16) qui fait partie du système de guidage vers l'emplacement de collecte, où l'emplacement d'échange (16) fait partie d'une rangée d'emplacements d'échange (16) qui sont prévus directement les uns au-dessus des autres au moins sur une partie des niveaux (5), le système de transport comprenant un certain nombre d'éléments de transfert (32) qui sont agencés directement les uns au-dessus des autres et sont prévus aux mêmes niveaux (5) que les emplacements d'échange (16), ainsi qu'un élévateur (33) pour les récipients (2), où chacun des éléments de transfert (32) s'étend entre un emplacement d'échange (16) et l'élévateur (33) pour transférer des récipients (2) d'un emplacement d'échange (16) à l'élévateur (33), le système de transport comprenant en outre un convoyeur d'alimentation (36) qui s'étend entre l'élévateur (33) et l'emplacement de collecte (21) pour transporter en outre un récipient (2) à partir de l'élévateur (33) vers l'emplacement de collecte (21), où l'élévateur (33) est pourvu d'un élément de support (35) qui est configuré pour accepter un récipient (2) à partir d'un élément de transfert (32) et pour transférer le récipient (2) au convoyeur d'alimentation (36), **caractérisé en ce que** chacun des éléments de transfert (32) est configuré pour loger temporairement au moins deux récipients successifs (2) à au moins deux positions de transfert respectives de chaque élément de transfert (32), et **en ce qu'**au moins certains des emplacements d'échange (16) sont de conceptions multiples avec un certain nombre de positions d'échange, où chaque position d'échange s'étend à côté d'une position de transfert de manière à pouvoir transférer un récipient de produit (2) à partir d'un chariot (8) d'une position de transfert à la position de transfert située à côté de la position d'échange.

2. Système (1) selon la revendication 1, **caractérisé en ce que** tous les emplacements d'échange (16) sont de conceptions multiples.

3. Système (1) selon la revendication 1 ou 2, **caractérisé en ce que** le nombre de positions d'échange d'un emplacement d'échange (16) est égal au nombre de positions de transfert de l'élément de transfert auxquelles les récipients (2) peuvent être transférés à partir de l'emplacement d'échange respectif.

4. Système (1) selon la revendication 1, 2 ou 3, **caractérisé en ce que** les emplacements d'échange (16) qui sont de conceptions multiples sont conçus comme des convoyeurs.

5. Système selon la revendication 1, 2, 3 ou 4, **caractérisé en ce que** les éléments de transfert (32) sont conçus comme des convoyeurs (32a, 32b).

6. Système (1) selon l'une des revendications précédentes, **caractérisé en ce que** chacun des éléments de transfert (32) est configuré pour loger temporairement pas plus et pas moins de deux récipients successifs.

7. Système (1) selon l'une des revendications précédentes, **caractérisé en ce que** les récipients (2) sont des récipients de produit (2), et **en ce qu'**un poste de collecte (21) est prévu à l'endroit de l'emplacement de collecte pour la collecte de produits dans des récipients de collecte (3) à partir des récipients de produit (2).

8. Système (1) selon l'une des revendications précédentes, **caractérisé en ce qu'**un poste de regroupement pour la collecte des récipients (2) sur un support est prévu à l'endroit de l'emplacement de collecte.

9. Système (1) selon l'une des revendications précédentes, **caractérisé en ce que** le nombre de rangées d'emplacements d'échange (16) diffère du nombre d'allées (6).

10. Système (1) selon l'une des revendications précédentes, **caractérisé en ce que** le nombre moyen de chariots (8) par niveau (5) est inférieur au nombre d'allées (6).

11. Système (1) selon l'une des revendications précédentes, **caractérisé en ce que** les guides transversaux (15) sont au moins prévus sur les extrémités de tête des guides longitudinaux (7) faisant face à l'emplacement de collecte.

12. Système (1) selon l'une des revendications précédentes, **caractérisé en ce que** les guides transversaux (15) sont au moins prévus entre des extrémités de tête mutuellement opposées des guides longitudinaux (7).

13. Système (1) selon l'une des revendications précédentes, **caractérisé en ce que** le système (1) est pourvu d'un élévateur de chariot pour les chariots (8).

14. Système (1) selon l'une des revendications précédentes, **caractérisé en ce qu'**au moins certains des emplacements d'échange (16), de préférence tous les emplacements d'échange (16), sont de conceptions multiples afin de pouvoir transférer un récipient (2) à l'élément de transfert (32) qui est situé au niveau (5) de l'emplacement d'échange multiple respectif (16) à au moins deux différentes positions de logement.

15. Procédé pour la collecte selon des ordres de produits à un emplacement de collecte à partir de récipients (2) dans des récipients de collecte (3) ou pour la collecte de récipients (2) sur des supports, **caractérisé en ce qu'**un système (1) selon l'une des revendications précédentes est utilisé, dans lequel un récipient (2) est transféré à partir d'un chariot (8) d'une position d'échange à une position de transfert d'un élément de transfert (32), laquelle position de transfert est située entre l'élément de support (35) de l'élévateur (33) et une autre position de transfert de l'élément de transfert (32), sur laquelle autre position de transfert un récipient (2) est positionné.
